# EUROPEAN PATENT SPECIFICATION

(11) **EP 2 202 047 B1**
(45) Date of publication and mention of the grant of the patent: **20.02.2013**
(21) Application number: 08425812.8
(22) Date of filing: 22.12.2008
(51) Int. Cl.: B29C 49/56, C03B 9/14, C03B 9/34, C03B 9/353, B29C 49/06

(54) **Blowmould with locking device and the method**
Blasform mit Verrieglungsvorrichtung und das Verfahren
Moule pour formage par soufflage avec system de verrouillage et le procédé

(43) Date of publication of application: 30.06.2010
(73) Proprietor: Gea Procomac S.p.A., 43038 Sala Baganza (PR) (IT)
(72) Inventor: Dordoni, Claudio, 43100 Parma (IT); Troadec, Bernard, 44210 Pornic (FR)
(74) Representative: Lissandrini, Marco

(56) References cited:
- EP-A- 1 980 386
- DE-A1-102007 022 638
- US-A1- 2002 093 126

## Description

The present invention relates to a mould and a method for moulding a container.

In particular, said mould finds application in the bottling sector, e. g. in (linear or rotary) machines for moulding containers by blowing parisons of heated plastic material.

As is well known, there are different types of moulds, classified according to the opening principle. "Linear" moulds are formed by two half-portions or half-moulds, relatively mobile with respect to one another by translation. "Alligator mouth" (or more briefly "alligator") moulds and "book moulds" comprise two half-moulds hinged to each other at one of the two ends. In addition to the half-moulds, generally there is also an element for shaping the bottom of the container (commonly known in the industry by the term "bottom plate"). The bottom plate is positioned at one of the two bases of the mould, in such a way that it can be engaged (or disengaged) by the half-moulds during the closing (or opening) movement.

Alligator moulds are constituted by a fixed half-mould and by a mobile half-mould, both vertical in the closed position. In particular, in rotating carousel machines, the fixed half-mould is positioned tangentially to the carousel. Alligator moulds are **characterized in that** the half-moulds are mutually hinged according to a substantially horizontal hinge axis. In this way, the mobile half-mould rotates around the hinge from a vertical position (corresponding to the closed mould) to a horizontal position (corresponding to the open mould). The motion of the mobile half-mould is commanded through one or more cams that engage corresponding rollers connected to levers for actuating the half-moulds. The main drawback of the use of alligator moulds is linked to the fact that the mobile half-mould requires a very wide aperture angle which, in turn, determines high stresses on the lever system and on the sliding rollers on the command cams.

Another disadvantage of alligator moulds is linked to the fact that the fixed half-mould requires an offsetting travel to allow the disengagement of the bottom plate. Since said travel is actuated pneumatically, there is a high consumption of air and, hence, of energy.

Relative to alligator moulds, book moulds have a substantially vertical hinge axis and they have a smaller aperture angle, determining lesser stresses on the lever system and on the sliding rollers of the cams. During the blowing step, into the parison is blown air at 40 bar pressure, therefore the closed half-moulds are internally subjected to a thrust of several tons, depending on the dimensions and shape of the final container. The blocking devices of the moulds in closed configurations must be able to withstand such stresses.

A first known solution consists of employing vertically mobile pins, inserted within borings obtained on the mould holders. In particular, said borings are obtained in the area of separation and opening of the half-moulds and they are distributed over the entire height of the half-moulds.

The main drawback of currently known solutions is linked to the fact that, to withstand the stresses during the blowing step and to prevent deformations, the blocking devices are very heavy, so the actuation of the half-moulds requires a considerable expenditure of energy. For this reason, in proximity to the edge of the moulds (i.e. of the borings) are present hydraulic or mechanical systems for commanding the blocking devices, which contribute to make the moulds very costly.

Moreover, to assure good operation, the coupling between pins and borings must provide for minimum backlash. However, this causes an aperture, albeit limited, at the plane of separation of the half-moulds, which aperture can generate superficial damages on the body of the containers produced, worsening their quality.

Moreover, since the stresses caused by blowing are prevalently concentrated at the hinges, considerable deformations are generated in the areas neighbouring the pins.

Another solution, disclosed in EP1980386, consists in a mould in which the action of lateral blocking devices is strengthened by an upper blocking element of the mould.

In this context, the technical task on which the present invention is based is to propose a mould and a method for moulding a container, which overcomes the drawbacks of the aforementioned prior art.

In particular, an object of the present invention is to propose a mould for moulding a container, able to withstand the stresses acting on the closed half-moulds during the blowing of high pressure air.

Another object of the present invention is to make available a mould for moulding a container, in which the blocking of the half-moulds during the blowing step enables to prevent or reduce superficial damages to the body of the moulded container, suffered during the blowing operation. An additional object of the present invention is to propose a mould that is constructively simple, light and economical.

Yet another object of the present invention is to propose a mould and a method for moulding a container in which the energy required to actuate the half-moulds and block them is reduced relative to prior art solutions.

The technical task and the objects specified above are substantially achieved by a mould and by a method for moulding a container, comprising the technical characteristics exposed in one or more of the appended claims.

Additional characteristics and advantages of the present invention shall become more readily apparent from the indicative, and hence non limiting, description of a preferred but not exclusive embodiment of a mould and a method for moulding a container, as illustrated in the accompanying drawings in which:
- figure 1 shows a perspective view of a mould for moulding a container, according to the present invention, in an open position;
- figure 2 shows a sectioned lateral view of the mould of figure 1, in the open position;
- figure 3 shows a top view of the mould of figure 1, in the open position;
- figures 4-11 show perspective views of the mould of figure 1, in as many configurations corresponding to different instants in the work process;
- Figures 12-19 show sectioned lateral views of the mould of figure 1 (some parts have been removed for the sake of clarity), in the same configurations as figures 4-11;
- figure 20 shows a top view of a system of moulds for moulding containers, according to the present invention;
- figure 21 shows a perspective view of a moulding machine of the type with rotating carousel bearing moulds according to figure 1.

With reference to the figures, the number 1 indicates a mould for moulding at least one container 2 obtained from a parison 3. In particular, the parison 3, formed by a tubular central body and by a mouth (not subjected to work processes), is made of plastic material. Alternatively, the parison 3 is made of glass.

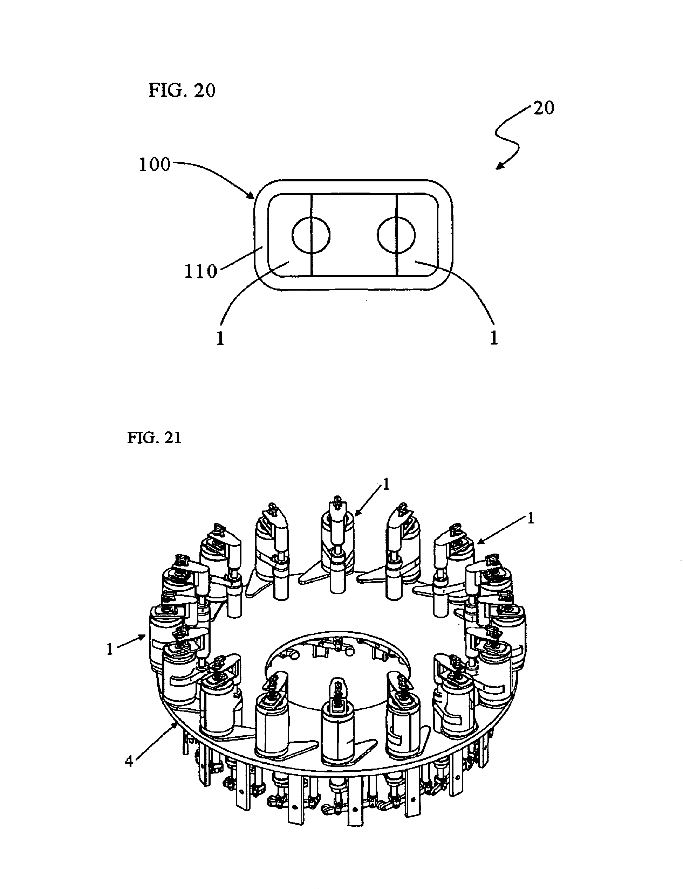

In the embodiment described and illustrated herein (see figure 21), the mould 1 is positioned on a moulding machine of the type with rotating carousel 4. In an alternative embodiment (not shown), the mould 1 is positioned on a linear moulding machine.

The mould 1 is formed by two half-portions 5 relatively mobile with respect to one another at least between a closed position and an open position of the mould 1. In particular, when the mould 1 is in the closed position, the two half-portions 5 are close to each other in such a way as to define at least one cavity 6 for housing the parison 3 or the moulded container 2. In an embodiment (not shown), the two half-portions 5 placed close to each other define a plurality of housing cavities 6 for as many parisons 3 or moulded containers 2. Vice versa, when the mould 1 is in the open position, the two half-portions 5 are moved away from each other to enable the disengagement of the moulded container 2.

Preferably, the half-portions 5 are mutually hinged in such a way as to rotate around a shared articulation axis 7. In particular, in the embodiment described and illustrated herein, the mould 1 is of the "book" type. The half-portions 5 are both mobile by rotation around the axis 7, which is substantially vertical, i.e. orthogonal to the rotating carousel 4.

In an alternative embodiment (not shown), the mould 1 is of the "alligator type". In this case, one of the half-portions 5 is fixed and the other one is mobile by rotation around the axis 7. In particular, in this embodiment, the axis 7 is horizontal, i.e. it lies in the plane defined by the rotating carousel 4.

In an additional embodiment (not shown), the mould I is of the "linear" type, i.e. the two half-portions 5 are moved towards and away from each other by a translating motion. In particular, the half-portions 5 can both be mobile or one can be fixed and one mobile.

The mould 1 is provided with fastening means 10 operatively active on the mould 1 in the closed position. In particular, the fastening means 10 are mobile between a locking configuration and an unlocking configuration of the mould 1 in the closed position.

The fastening means 10 comprise at least a first locking collar 11a operatively active on the half-portions 5 of the mould 1 to encircle them in such a way as to lock the mould 1 in the closed position. Advantageously, the first locking collar 11a encircles a first base 9a of the mould 1 in the closed position. Preferably, the fastening means 10 comprise a second locking collar 11b to encircle a second base 9b of the mould 1 in the closed position.

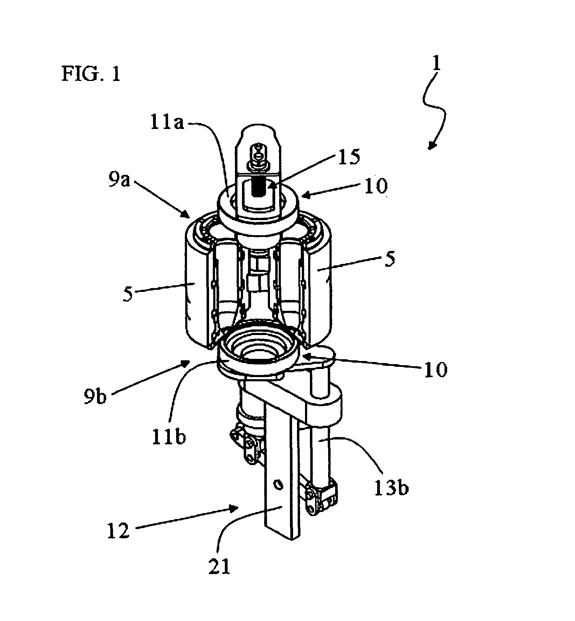

Advantageously, in the embodiment described and illustrated herein, the first locking collar 11a and the second locking collar 11b are actuated between the locking configuration and the unlocking configuration of the mould 1 by a single actuating member 12, visible e.g. in figure 1. Preferably, the actuating member 12 is constituted by a first rod 13a able to actuate the first locking collar 11a and by a second rod 13b able to actuate the second locking collar 11b. Said rods 13 are hinged to a connecting rod 14 having its fulcrum on a support 21 connected to the mould 1. In particular, the rods 13 are hinged to the connecting rod 14 at opposite parts relative to the support 21. Preferably, the rods 13 are provided with one or more elastic members (e.g. springs or pneumatic cylinders) able to compensate for any machining and mounting tolerances existing between the first base 9a and the second base 9b and therefore to facilitate the coupling between the collars 11 and the respective bases 9. One of the ends of the connecting rod 14 bears a sliding roller 22 able to come in contact with a fixed cam (not shown) integral to the foundation of the rotating carousel 4. In particular, said cam has a variable profile according to the angular position assumed by the mould 1 as a result of the rotation of the rotating carousel 4. Alternatively, the mould 1 is provided with two distinct actuating members (not shown) each able to actuate one of the locking collars 11 between the locking configuration and the unlocking configuration of the mould 1. In particular, a first actuating member is able to actuate the first collar 11a and a second actuating member is able to actuate the second collar 11b. In this case, both actuating members are constituted by distinct actuating rods, each of which is hinged to a respective connecting rod provided with a sliding roller able to come in contact with corresponding fixed cams, integral with the foundation of the rotating carousel 4. Said cams have variable profiles during the rotation of the rotating carousel 4, therefore the collars 11 can follow different motion laws.

Preferably, the mould 1 is provided with a bottom plate 8 co-operating with the half-portions 5 to shape the bottom of the container 2. In particular, the bottom plate 8 is positioned at the first base 9a of the mould 1. In the embodiment described and illustrated herein, the first base 9a is positioned at a greater distance from the rotating carousel 4 than the second base 9b, i.e. the parison 3 and the moulded container 2 are overturned (the mouth of the container 2 is oriented downwards). Alternatively, the first base 9a may be positioned at a smaller distance from the rotating carousel 4 than the second base 9b, i.e. the parison 3 and the moulded container 2 are upright (the mouth of the container 2 is oriented upwards).

The bottom plate 8 is coupled to the first locking collar 11a through an elastic member 15. For example, said elastic member 15 is constituted by a spring that allows relative motion between the bottom plate 8 and the first locking collar 11a in such a way that the bottom plate 8 can move from an engagement configuration to a disengagement configuration relative to the half-portions 5.

Preferably, the locking collars 11 are integral with respective collar holders 19. In this case, the spring couples the bottom plate 8 to a first collar holder 19a, which is integral with the first locking collar 11a. The relative motion between the bottom plate 8 and the first collar holder 19a (and the first collar 11a) is necessary to allow the disengagement (and the engagement) of the bottom plate 8 in relation to the half-portions 5 at different times with respect to the completion of the locking (and of the unlocking) of the first base 9a by the first collar 11a. Use of the spring enables to prevent, during said relative motion, the bottom plate 8 from accidentally stopping in incorrect intermediate positions for reasons linked to wear or jams. If the parison 3 is overturned, the elastic force of the spring is added to the force of gravity acting on the bottom plate 8, allowing always to bring the bottom plate 8 back underneath the first collar 11 a. If the parison is upright, the function of the spring is to contrast the force of gravity which would tend to attract the bottom plate 8 downwards, whilst the elastic force acts in the opposite direction, bringing the bottom plate 8 back above the first collar 11a. Alternatively, the movement of the bottom plate 8 from the engaged configuration to the disengaged configuration relative to the half-portions 5 takes place by means of an actuator member (not shown) able to actuate the bottom plate 8 separately from the first locking collar 11a. In this case, the actuator member is independent of the sole actuating member 12 (or of the two distinct actuating members) of the locking collars 11. For example, the actuator member is constituted by a control rod of a corresponding fixed cam, integral with the foundation of the rotating carousel 4.

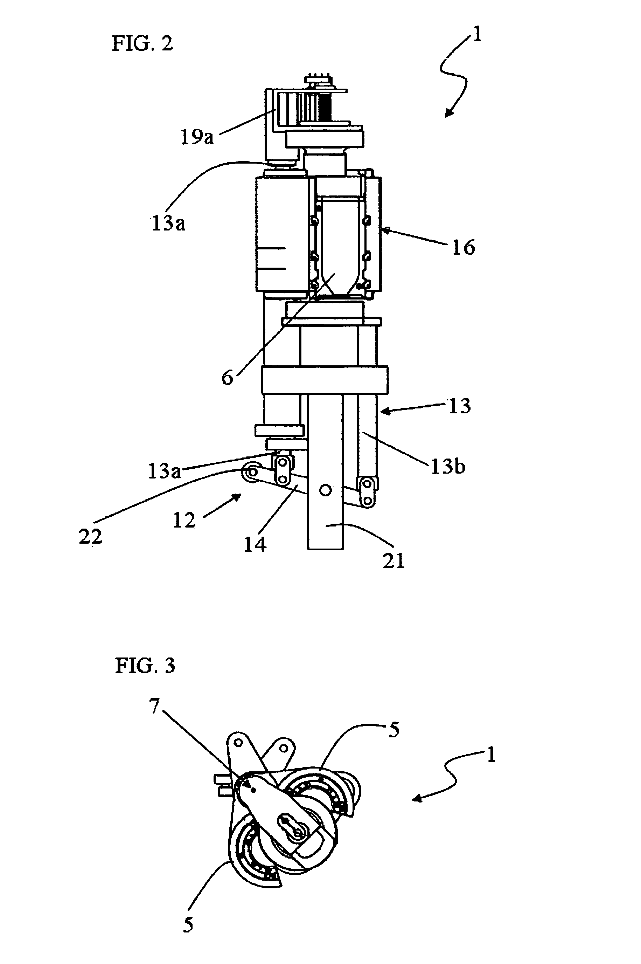

Preferably, when the mould 1 is in the closed position it defines a cylindrical outer surface 16, indicated in figure 2. In this case, the first locking collar 11a has the shape of a substantially circular ring. Preferably, the second locking 11b also has the shape of a substantially circular ring.

Alternatively, the mould 1 in the closed position has the shape of a flattened cylinder or of a prism. In this case, the locking collars 11 have substantially oval or polygonal shape.

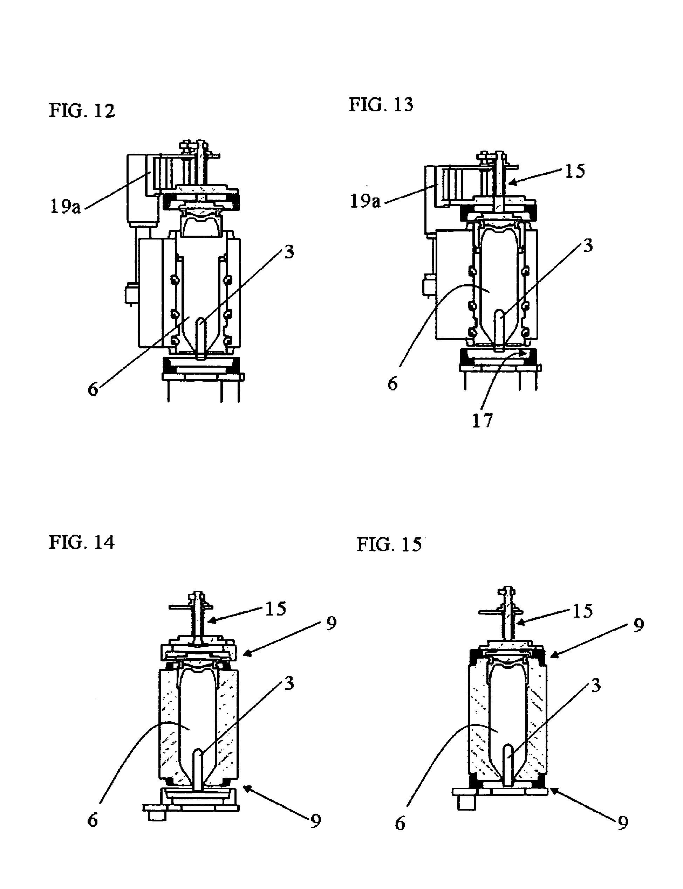

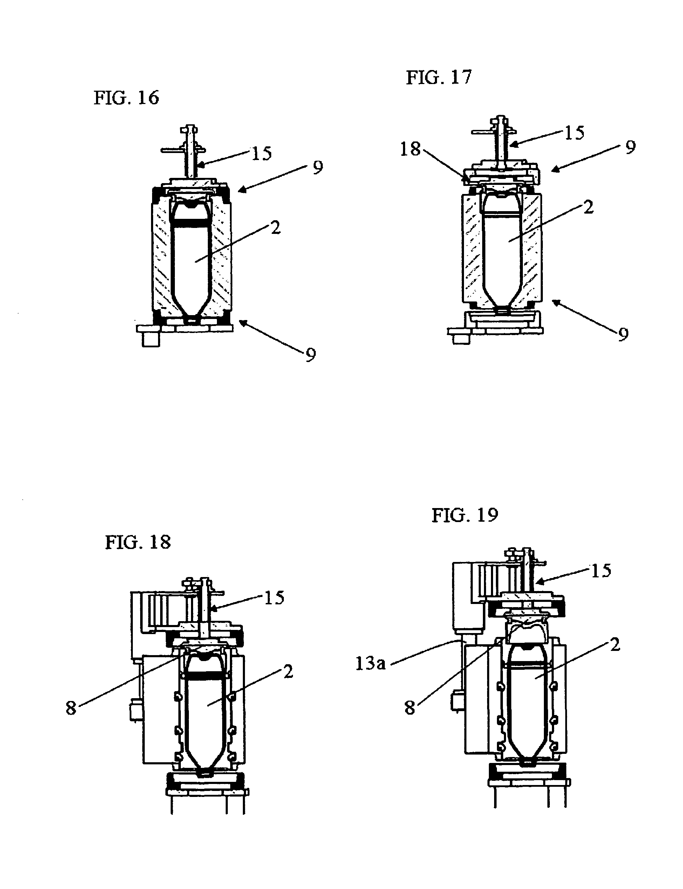

Advantageously, the bases 9 of the mould 1 have lateral walls, hereafter referred to as profiles 17, shaped complementarily to the locking collars 11 (see figures 13). Preferably, the profiles 17 of the bases 9 are cone frustum shaped and shaped complementarily to the corresponding cone frustum shaped profiles 18 of the locking collars 11 (see figure 17). The extensions of the cone frustum shaped profiles 17 of the bases 9 define a cone whose angle is less than or equal to 45°. Preferably, said angle is less than or equal to 7°.

Alternatively, the profiles 17 of the bases 9 are constituted by a plurality of inclined planes shaped complementarily to the profiles 18 of the locking collars 11. In another embodiment, the profiles 17 of the bases 9 are curved and shaped complementarily relative to the curved profiles 18 of the locking collars 11.

In figure 20, the reference number 20 indicates a system comprising at least one pair of moulds 1. Preferably, each mould 1 has a fixed half-portion 5 and a mobile half-portion 5. In particular, the fixed half-portions 5 of the two moulds 1 are mutually adjacent. For simplicity of construction, the fixed half-portions 5 may be constituted by a single body.

The system 20 is provided with fastening means 100 mobile between a locking configuration and an unlocking configuration of the system 20 of moulds 1 in the closed position.

The fastening means 100 comprise at least one locking collar 110 so shaped as to encircle the system 20 locking the moulds 1 in the closed position.

The method for moulding a container from a parison, according to the present invention, is described hereafter.

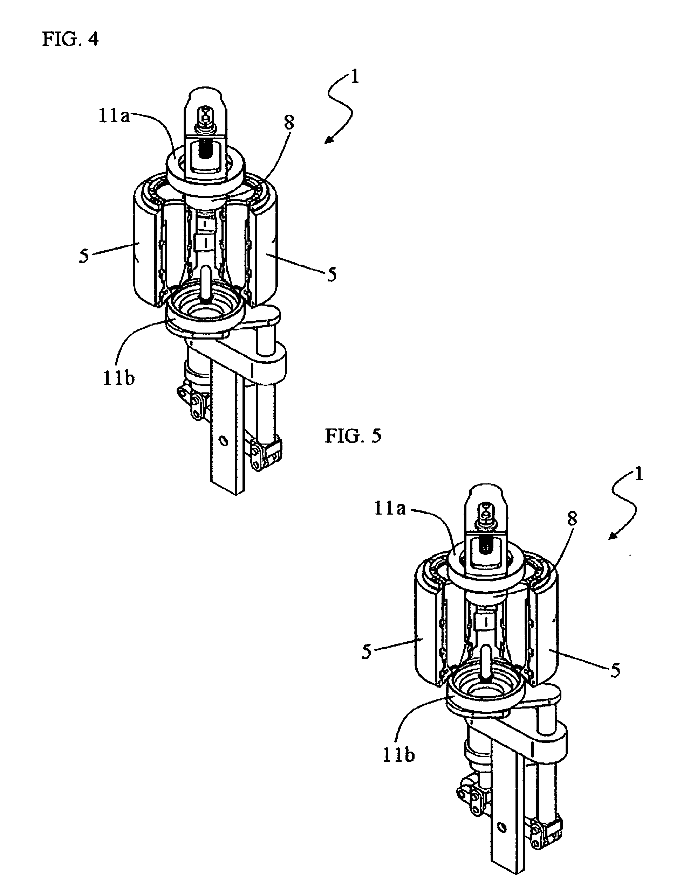

As shown in figures 4 and 12, the parison 3 is inserted between the two half-portions 5 of the open mould 1. During this step, the half-portions 5 do not adhere to the parison 3, which therefore is supported and maintained within the half-portions 5 by means of a dedicated member (not shown).

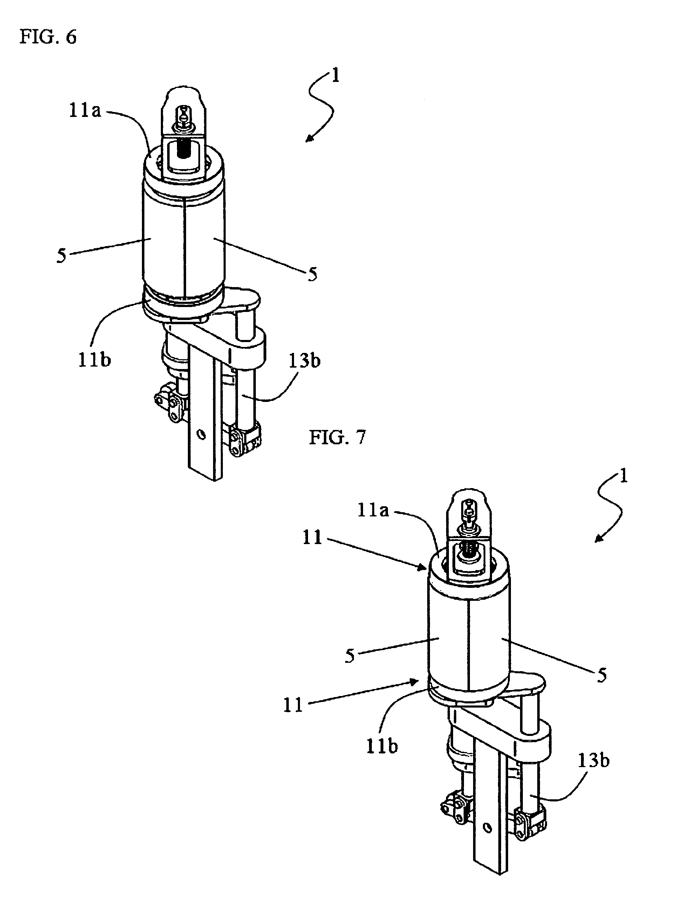

The two half-portions 5 are moved progressively closer to each other in such a way as to close the mould 1, as shown in figures 5 and 13. In the case of the book mould 1 shown in the figures, the half-portions 5 are mutually approached by rotation around the shared articulation axis 7. Simultaneously, the fastening means 10 are activated. In particular, during the rotation of the carousel 4, the roller 22 engages the fixed cam, determining the rotation of the connecting rod 14. In this way, the rods 13 actuate the respective locking collars 11 (and collar holders 19) making them move progressively closer to the corresponding bases 9 of the mould 1. The bottom plate 8 also, being coupled to the first collar holder 19a by means of the elastic member 15, approaches the first base 9a until reaching the engaged configuration with the half-portions 5. The mutual approach of the half-portions 5 continues until their mutual contact and the bottom plate 8 remains in the engaged configuration with the half-portions 5 (see figures 6 and 14). At the end of the closing of the mould 1, the parison 3 is housed inside the cavity 6 defined by the half-portions 5.

As shown in figures 7 and 15, the rods 13 continue their travel until the locking collars 11 complete their own travel approaching the respective bases 9 and the half-portions 5 are encircled at the bases 9. During this step, the bottom plate 8 remains motionless within the mould 1. In particular, in the illustrated embodiment, the half-portions 5 are locked by conical coupling of the profiles 17 of the bases 9 with the respective profiles 18 of the locking collars 11.

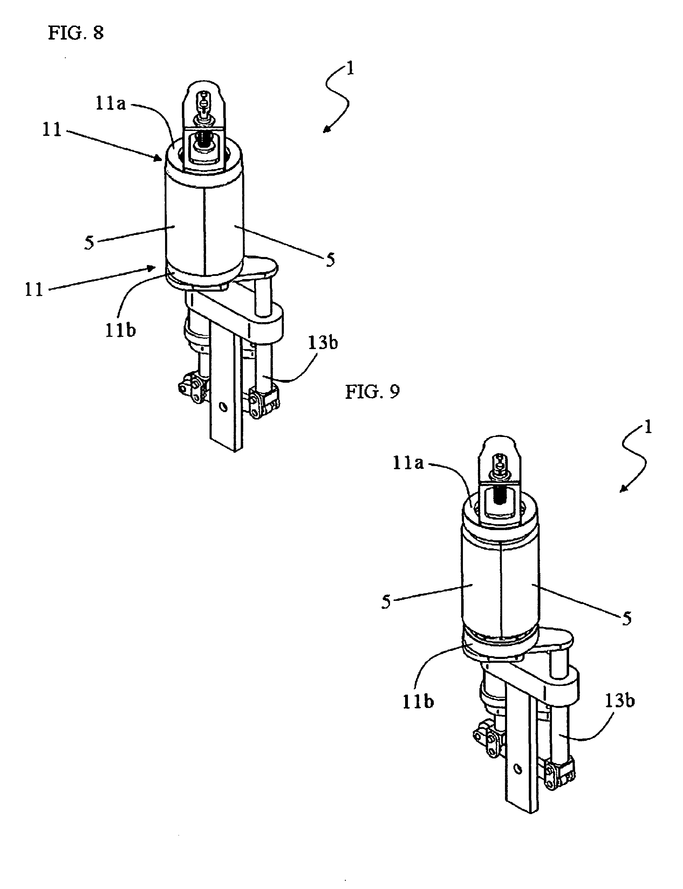

The parison 3 is then processed (e.g. by blowing) to obtain the container 2. Said processing step corresponds to the configuration of the mould 1 shown in figures 8 and 16.

At the end of the blowing step, during the rotation of the carousel 4, the roller 22 returns to engage the fixed cam, determining the rotation of the connecting rod 14 in the opposite direction to the step of closing of the mould 1. In this way, the rods 13 actuate the respective locking collars 11 (and collar holders 19) making them move progressively farther away from the corresponding bases 9 of the mould 1, as shown in figures 9 and 17. The bottom plate 8, being coupled to the first collar holder 19a by means of the elastic member 15, remains motionless.

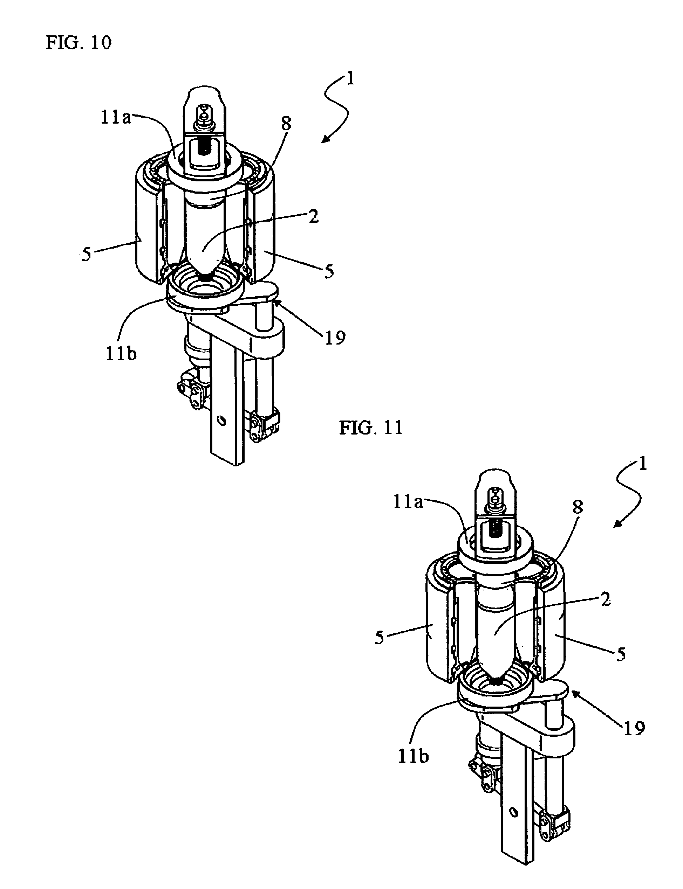

Subsequently, the locking means 10 continue to move away from the mould 1 and the two half-portions 5 are progressively moved away by rotation around the axis 7 in such a way as to open the mould 1 and allow the disengagement of the bottom plate 8, as shown in figures 10 and 18.

The half-portions 5 move away until the complete opening of the mould 1 and until the bottom plate 8 completes its removal travel, in such a way as to release the moulded container 2 (see figures 11 and 19). Subsequently, the moulded container 2 is engaged and extracted from the mould 1 by means of the dedicated member.

It should be noted that, if a single actuating member 12 is used, the first collar 11a (bearding the bottom plate 8) has to complete a longer travel than the second collar 11b, so the disengagement times of the two collars 11 are different. This holds true if the two collars 11 are identical. If collars 11 with different heights are appropriately chosen, their travels are made uniform and the disengagement times are also equal.

From the above description, the characteristics of the mould for moulding at least one container and the method thereof, according to the present invention, are clear, as are its advantages.

In particular, thanks to the use of at least one collar to encircle the half-portions of the closed mould, the stresses due to blowing are distributed in the mould and not concentrated at the locking areas. Stresses are distributed along the outer perimeter of the mould and they are no longer concentrated at hinges or pivot pins as was the case in prior art solutions. Moreover, the conical coupling between the collars and the bases is so rigid as to prevent or limit any moves of the half-portions away from each other during their locking. In this way, superficial damage in the body of the moulded container is prevented or reduced. Said coupling is free of backlash and it prevents the opening of the mould at the plane of separation of the half-moulds. In particular, the smaller the angle of the cone the greater the friction component that keeps the collars adhering to the respective bases.

Moreover, the mechanisms for actuating and locking the half-moulds are simple and slim. In particular, to lock (or unlock) the closed mould it is sufficient to move the collars closer to (or away from) the respective bases of the mould. Therefore, hydraulic or mechanical devices for actuating the locking systems are eliminated.

Moreover, use of the spring enables to move the bottom plate relative to the first collar, preventing the bottom plate from stopping in undesired configurations.

Moreover, use of the collars, together with the spring, favours the manufacture of a constructively simple, light and economical mould.

## Claims

1. Mould (1) for moulding at least one container (2) obtained from a parison (3), comprising:
two half-portions (5) relatively mobile with respect to one another at least between a closed position of the mould (1), in which said half-portions (5) are moved close to each other to define at least one cavity (6) for housing the parison (3) or the moulded container (2), and an open position of the mould (1), in which said half-portions (5) are moved away from each other to enable the disengagement of the moulded container (2);
means (10) for fastening the mould (1), mobile between a locking configuration and an unlocking configuration of the mould (1) in the closed position,
**characterised in that**
said fastening means (10) comprise a first locking collar (11a) operatively active on the half-portions (5) of the mould (1) to encircle a first base (9a) of the mould (1) in such a way as to lock the mould (1) in the closed position, and a second locking collar (11b) to encircle a second base (9b) of the mould (1) in the closed position,
and **in that** the mould (1) further comprises a bottom plate (8) positioned at said first base (9a) of the mould (1) and co-operating with the half-portions (5) to shape the bottom of the container (2), an elastic member (15) coupling the bottom plate (8) to the first locking collar (11a).

2. Mould (1) as claimed in claim 1, comprising a single actuating member (12) for actuating said first locking collar (11a) and said second locking collar (11b) between the locked configuration and the unlocked configuration of the mould (1).

3. Mould (1) as claimed in claim 1, comprising two distinct actuating members, each able to actuate one of said locking collars (11) between the locked configuration and the unlocked configuration of the mould (1).

4. Mould (1) as claimed in claim 1, comprising an actuator member for actuating the bottom plate (8) independently of the first locking collar (11a), said bottom plate (8) moving from an engaged configuration to a disengaged configuration relative to said half-portions (5).

5. Mould (1) as claimed in claims 1 to 4, wherein said bases (9) of the mould (1) have profiles (17) shaped complementarily relative to said locking collars (11).

6. Mould (1) as claimed in claim 5, wherein said profiles (17) of the bases (9) are cone frustum shaped and complementarily shaped relative to corresponding cone frustum profiles (18) of said locking collars (11).

7. Mould (1) as claimed in any of the previous claims, wherein said half-portions (5), in the closed position of the mould (1), are approached to each other to define a plurality of housing cavities (6) for as many parisons (3) or moulded containers (2).

8. Mould (1) as claimed in claim 1, defining, in the closed position, a cylindrical outer surface, said first locking collar (11a) having the shape of a substantially circular ring.

9. Mould (1) as claimed in any of the previous claims, wherein the half-portions (5) are mutually hinged in such a way as to rotate around a shared articulation axis (7).

10. Mould (1) as claimed in claim 9, wherein the shared articulation axis (7) is substantially vertical.

11. Method for moulding a container (2) from a parison (3), comprising the following steps:
inserting the parison (3) between two half-portions (5) of an open mould (1);
maintaining the parison (3) between said half-portions (5) of the mould (1);
closing the mould (1) moving said half-portions (5) close to each other;
locking the mould (1) shut with fastening means (10);
processing the parison (3) to obtain the container (2);
removing the means (10) for fastening the mould (1);
opening the mould (1) by moving said half-portions (5) away from each other;
extracting the moulded container (2) from the mould (1),
**characterised in that** the step of locking the closed mould (1) takes place by encircling said half-portions (5) by means of a first locking collar (11a) and a second locking collar (11b) and **in that** said step of locking takes place after a step of moving a bottom plate (8) in an engaged configuration relative to said half-portions (5) in order to shape the bottom of the container (2), said bottom plate (8) being coupled to the first locking collar (11a) by means of an elastic member (15).

## Patentansprüche

1. Form (1) zum Formen von mindestens einem Behälter (2) aus einer Vorform (3), umfassend:
zwei Halbteile (5), die relativ zueinander beweglich sind, und zwar mindestens zwischen einer geschlossenen Stellung der Form (1), in der die Halbteile (5) einander angenähert werden, um mindestens einen Hohlraum (6) zur Aufnahme der Vorform (3) oder des geformten Behälters (2) zu definieren, und einer offenen Stellung der Form (1), in der die Halbteile (5) voneinander entfernt werden, um das Herausnehmen des geformten Behälters (2) zu ermöglichen;
Mittel (10) zum Befestigen der Form (1), die zwischen einer Verriegelungskonfiguration und einer Entriegelungskonfiguration der Form (1) in der geschlossenen Stellung beweglich sind,
**dadurch gekennzeichnet, dass**
diese Befestigungsmittel (10) eine erste Verriegelungsschelle (11a) umfassen, die betriebswirksam auf den Halbteilen (5) der Form (1) aktiv ist, um eine erste Basis (9a) der Form (1) zu umschließen, sodass die Form (1) in der geschlossenen Stellung verriegelt wird, und eine zweite Befestigungsschelle (11b), um eine zweite Basis (9b) der Form (1) in der geschlossenen Stellung zu umschließen,
und dadurch, dass die Form (1) zudem eine Bodenplatte (8) umfasst, die an der ersten Basis (9a) der Form (1) angebracht ist und mit den Halbteilen (5) zusammenwirkt, um den Boden des Behälters (2) zu bilden, wobei ein elastisches Glied (15) die Bodenplatte (8) mit der ersten Verriegelungsschelle (11a) kuppelt.

2. Form (1) nach Anspruch 1, umfassend ein einzelnes Betätigungsglied (12) zum Betätigen der ersten Verriegelungsschelle (11a) und der zweiten Verriegelungsschelle (11b) zwischen der verriegelten Konfiguration und der entriegelten Konfiguration der Form (1).

3. Form (1) nach Anspruch 1, umfassend zwei unterschiedliche Betätigungsglieder, wobei jedes davon in der Lage ist, eine dieser Verriegelungsschellen (11) zwischen der verriegelten Konfiguration und der entriegelten Konfiguration der Form (1) zu betätigen.

4. Form (1) nach Anspruch 1, umfassend ein Betätigungsglied, um die Bodenplatte (8) unabhängig von der ersten Verriegelungsschelle (11a) zu bewegen, wobei sich die Bodenplatte (8) von einer Eingriffkonfiguration in eine abgelöste Konfiguration zu den Halbteilen (5) bewegt.

5. Form (1) nach Anspruch 1 bis 4, wobei die Basen (9) der Form (1) Profile (17) aufweisen, die ergänzend zu den Verriegelungsschellen (11) ausgebildet sind.

6. Form (1) nach Anspruch 5, wobei die Profile (17) der Basen (9) kegelstumpfförmig und ergänzend zu den entsprechenden kegelstumpfförmigen Profilen (18) der Verriegelungsschellen (11) ausgebildet sind.

7. Form (1) nach einem der vorhergehenden Ansprüche, wobei die Halbteile (5) in der geschlossenen Stellung der Form (1) aneinander angenähert werden, um eine Vielzahl an Aufnahmehohlräumen (6) für ebenso viele Vorformen (3) oder geformte Behälter (2) zu definieren.

8. Form (1) nach Anspruch 1, definierend in der geschlossenen Stellung eine zylindrische Außenfläche, wobei die erste Verriegelungsschelle (11a) die Form eines im Wesentlichen kreisförmigen Rings besitzt.

9. Form (1) nach einem der vorhergehenden Ansprüche, wobei die Halbteile (5) gegenseitig mithilfe eines Gelenks so verbunden sind, dass sie sich rund um eine gemeinsame Gelenkachse (7) drehen.

10. Form (1) nach Anspruch 9, wobei die gemeinsame Gelenkachse (7) im Wesentlichen vertikal ist.

11. Verfahren zum Formen eines Behälters (2) aus einer Vorform (3), umfassend folgende Schritte:
Einsetzen der Vorform (3) zwischen zwei Halbteile (5) einer offenen Form (1);
Beibehalten der Vorform (3) zwischen den genannten Halbteilen (5) der Form (1);
Schließen der Form (1) durch die Annäherung der Halbteile (5);
Verriegeln der Form (1) verschlossen mit Befestigungsmitteln (10);
Bearbeiten der Vorform (3), um den Behälter (2) zu erhalten;
Entfernen der Mittel (10) zum Befestigen der Form (1);
Öffnen der Form (1), indem die genannten Halbteile (5) voneinander entfernt werden;
Herausnehmen des geformten Behälters (2) aus der Form (1),
**dadurch gekennzeichnet, dass** der Schritt des Verriegelns der geschlossenen Form (1) stattfindet,
indem die Halbteile (5) mittels einer ersten Verriegelungsschelle (11a) und einer zweiten Verriegelungsschelle (11b) umschlossen werden, und
dadurch, dass der Schritt des Verriegelns nach dem Schritt des Bewegens einer Bodenplatte (8) in eine Eingriffposition zu den Halbteilen (5), um den Boden des Behälters (2) auszubilden stattfindet, wobei die Bodenplatte (8) mit der ersten Verriegelungsschelle (11a) mittels eines elastischen Glieds (15) gekuppelt ist.

## Revendications

1. Moule (1) pour mouler au moins un récipient (2) réalisé à partir d'une ébauche (3), comprenant:
deux demi-portions (5) relativement mobiles l'une par rapport à l'autre, au moins entre une position de fermeture du moule (1), dans laquelle lesdites demi-portions (5) se rapprochent afin de former au moins une cavité (6) pour loger l'ébauche (3) ou le récipient moulé (2), et une position d'ouverture du moule (1),
dans laquelle lesdites demi-portions (5) s'éloignent pour permettre le détachement du récipient moulé (2) ;
des moyens (10) pour fixer le moule (1), mobiles entre une configuration de verrouillage et une configuration de déverrouillage du moule (1) dans la position de fermeture,
**caractérisé en ce que**
lesdits moyens de fixation (10) comprennent un premier collier de verrouillage (11a) opérationnellement actif sur les demi-portions (5) du moule (1) pour encercler une première base (9a) du moule (1) de sorte à verrouiller le moule (1) dans la position de fermeture,
et un second collier de verrouillage (11b) pour encercler une seconde base (9b) du moule (1) dans la position de fermeture,
et **en ce que** le moule (1) comprend de plus une plaque inférieure (8) située sur ladite première base (9a) du moule (1) et coopérant avec les demi-portions (5) pour former le fond du récipient (2), un organe élastique (15) accrochant la plaque inférieure (8) au premier collier de verrouillage (11a).

2. Moule (1) selon la revendication 1, comprenant un organe d'actionnement simple (12) pour actionner ledit premier collier de verrouillage (11a) et ledit second collier de verrouillage (11b) entre la configuration de verrouillage et la configuration de déverrouillage du moule (1).

3. Moule (1) selon la revendication 1, comprenant deux organes d'actionnement distincts, capables chacun d'actionner un desdits colliers de verrouillage (11) entre la configuration de verrouillage et la configuration de déverrouillage du moule (1).

4. Moule (1) selon la revendication 1, comprenant un organe d'actionnement pour actionner la plaque inférieure (8), indépendamment du premier collier de verrouillage (11a), ladite plaque inférieure (8) se déplaçant d'une configuration de prise à une configuration de hors prise par rapport auxdites demi-portions (5).

5. Moule (1) selon les revendications 1 à 4, dans lequel lesdites bases (9) du moule (1) possèdent des profilés (17) de forme complémentaire par rapport auxdits colliers de verrouillage (11).

6. Moule (1) selon la revendication 5, dans lequel lesdits profilés (17) des bases (9) sont en forme de cône tronqué et de forme complémentaire par rapport aux profilés en forme de cône tronqué correspondants (18) desdits colliers de verrouillage (11).

7. Moule (1) selon l'une quelconque des revendications précédentes, dans lequel lesdites demi-portions (5), dans la position de fermeture du moule (1), sont rapprochées l'une de l'autre pour définir une pluralité de cavités de logement (6) pour autant d'ébauches (3) ou de récipients moulés (2).

8. Moule (1) selon la revendication 1, définissant, dans la position de fermeture, une surface cylindrique externe, ledit premier collier de verrouillage (11a) ayant substantiellement la forme d'un anneau circulaire.

9. Moule (1) selon l'une quelconque des revendications précédentes, dans lequel les demi-portions (5) sont mutuellement montées pivotant de sorte à tourner autour d'un axe d'articulation partagé (7).

10. Moule (1) selon la revendication 9, dans lequel l'axe d'articulation partagé (7) est substantiellement vertical.

11. Procédé pour mouler un récipient (2) à partir d'une ébauche (3), comprenant les étapes suivantes:
introduire l'ébauche (3) entre deux demi-portions (5) d'un moule ouvert (1);
garder l'ébauche (3) entre lesdites demi-portions (5) du moule (1);
fermer le moule (1) en rapprochant lesdites demi-portions (5);
verrouiller le moule (1) fermé avec les moyens de fixation (10);
usiner l'ébauche (3) pour former le récipient (2);
retirer les moyens (10) de fixation du moule (1);
ouvrir le moule (1) en éloignant lesdites demi-portions (5);
extraire le récipient moulé (2) du moule (1),
**caractérisées en ce que** l'étape de verrouillage du moule fermé (1) se réalise en encerclant lesdites demi-portions (5) au moyen d'un premier collier de verrouillage (11a) et d'un second collier de verrouillage (11b) et **en ce que** ladite étape de verrouillage se réalise après une étape de déplacement d'une plaque inférieure (8) dans une configuration de prise par rapport auxdites demi-portions (5) afin de former le fond du récipient (2), ladite plaque inférieure (8) étant accouplée au premier collier de verrouillage (11a) au moyen d'un organe élastique (15).
